# EUROPEAN PATENT APPLICATION

(11) **EP 4 821 807 A1**
(43) Date of publication of application: **14.10.2026**
(21) Application number: 26166189.6
(22) Date of filing: 19.03.2026
(51) Int. Cl.: B64C 9/16, B29C 44/18, B62D 29/00, B64C 9/22

(54) **CAVITY FILLING DEVICE FOR A TRACK OF A HIGH LIFT SYSTEM, ASSOCIATED TRACK, TRACK ASSEMBLY, HIGH LIFT SYSTEM AND AIRCRAFT**

(30) Priority: 07.04.2025 DE 102025001172
(71) Applicant: Airbus Operations GmbH, 21129 Hamburg (DE)
(72) Inventor: Schlipf, Bernhard, 21129 Hamburg (DE); Daandels, Dort, 21129 Hamburg (DE)
(74) Representative: Airbus Germany

(57) **Abstract**

This cavity filling device (26) for a track (24) of a high lift system (16) is configured for being installed in a cavity (33, 36, 40) of the track (24) for obstructing said cavity (33, 36, 40), the cavity filling device (26) comprising an obstructing portion defining an obstruction face, the obstruction face being configured to be flush with a border (B) of the cavity (33, 36, 40) when the cavity filling device (26) is installed in said cavity (33, 36, 40).

## Description

The present disclosure relates to a cavity filling device for a track of a high lift system. This disclosure also relates to a track of a high lift system configured for receiving such a cavity filling device. This disclosure further relates to a track assembly comprising a cavity filling device as above mentioned and a track as above mentioned. This disclosure further relates to a high lift system comprising such a track assembly. This disclosure also relates to an aircraft comprising such a high lift system.

In the domain of high lift systems for aircrafts, and for example for leading edge high lift systems such as slats, one knows using tracks that are used to connect a wing body to a moveable surface. Such tracks define for example a deployment direction for the high lift system and are generally elongated along such a deployment direction, which is generally a curved direction.

Such tracks are generally formed by profiles defining cavities. For example, profile sections of such tracks have a Pi shape or double T shape. In particular, known tracks comprise lateral sides, extending laterally relatively deployment direction, and comprising lateral cavities. Know tracks also generally define distal cavities, for example between a distal end and a rack of these tracks.

Such tracks are however not entirely satisfying. In particular, cavities defined by such tracks, when exposed to an ambient airflow, increase turbulence of the airflow. Such increased turbulence generate noise which is undesirable for aircraft operation.

An object of the present invention is therefore to allow for reducing the noise generated by tracks of high lift systems.

To this end, the invention relates to a cavity filling device for a track of a high lift system, the cavity filling device being configured for being installed in a cavity of the track for obstructing said cavity, the cavity filling device comprising an obstructing portion defining an obstruction face, the obstruction face being configured to be flush with a border of the cavity when the cavity filling device is installed in said cavity.

A cavity filling device as above mentioned, and in particular having an obstruction face being configured to be flush with a border of the cavity when installed, is especially advantageous since this allows for a simple aerodynamic noise reduction of the tracks on which such cavity filling devices are installed.

According to other advantageous aspects of the invention, the cavity filling device comprises one or more of the following features taken alone or according to all technically possible combinations:
- the cavity filling device further comprises a fastening portion configured to be installed in the cavity for maintaining the obstruction face flush with the border of the cavity when the cavity filling device is installed in said cavity;
- the fastening portion comprises a plurality of lugs, each lug being configured for cooperating with a side of the cavity;
- the fastening portion comprises a fastening plate, the fastening plate being configured to be bolted at a bottom of the cavity;
- the obstructing portion comprises a shell element, the shell element defining the obstruction face;
- the obstructing portion comprises a foam element, the foam element defining the obstruction face;
- the plurality of lugs and the shell element are integral; and
- the foam element is bonded to the fastening plate.

The invention further relates to a track for a high lift system, the track defining a deployment direction for the high lift system, the track comprising at least one cavity, the at least one cavity being configured for receiving a cavity filling device as above mentioned.

According to an advantageous embodiment, the track comprises two substantially flat opposed lateral faces.

The invention further relates to a track assembly for a high lift system, the track assembly comprising a track as above mentioned and at least one cavity filling device as above mentioned, the at least one cavity filling device being installed in the cavity, or one of the cavities, of the track, for filling said cavity.

According to other advantageous aspects of the invention, the track assembly comprises one or more of the following features taken alone or according to all technically possible combinations:
- the track comprises concave opposed lateral sides, each concave lateral side defining a respective lateral cavity, a respective cavity filing device being installed in each of the defined lateral cavities, for filing said cavities; and
- the track comprises a rack arrangement, the track defining a distal cavity, arranged between the rack arrangement and a distal end of the track, and extending in the continuity of the rack arrangement, a respective cavity filing device being installed in the defined distal cavity.

The invention further relates to a high lift system comprising a wing body, a moveable surface and a track assembly as above mentioned, the track assembly connecting the wing body and the moveable surface.

The invention further relates to an aircraft comprising a high lift system as above mentioned.

The invention will be better understood when reading the following description, which is given solely by way of example and with reference to the appended drawings, in which:
- Figure 1 is a schematic view of an aircraft with a high lift system having a track equipped by a cavity filling device according to the invention;
- Figure 2 is a schematic view of the high lift system of figure 1;
- Figure 3, is a section view, taken along the cut plane C, of the track of the high lift system of figure 2;
- Figure 4, is a section view similar to the view of figure 3, of another example of track; and
- Figure 5, is a section view similar to the views of figures 3 and 4, in which another example of cavity filling device is visible.

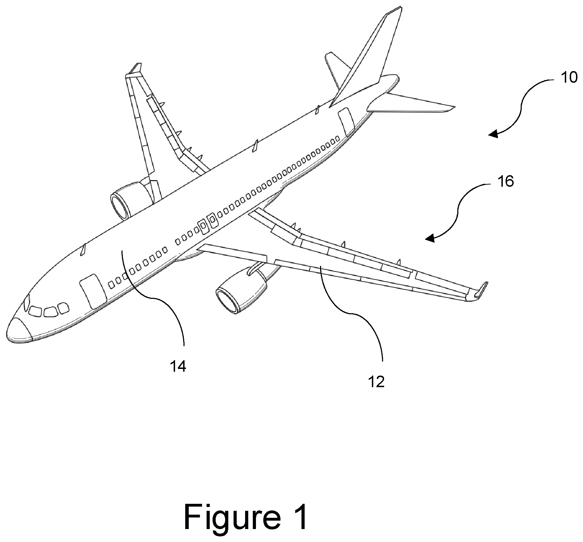

Referring to figure 1, an aircraft 10 comprises a wing 12 and a fuselage 14, the wing 12 being connected to the fuselage 14.

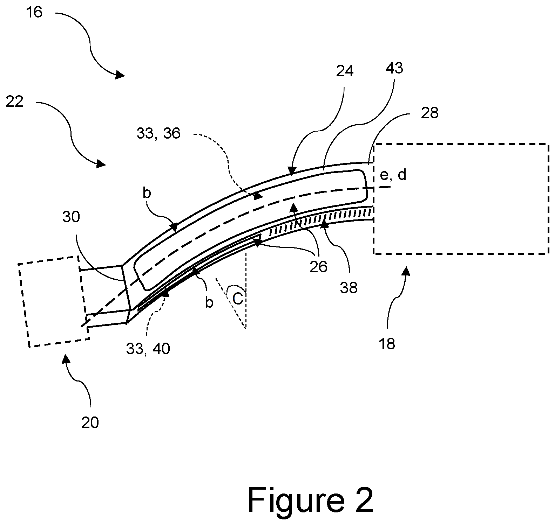

As illustrated on figure 2, the aircraft 10, and for example the wing 12 comprises a high lift system 16.

The high lift system 16 comprises a wing body 18, a moveable surface 20 and a track assembly 22.

The wing body 18 is for example a portion of the wing 12 which is fixed relatively to the fuselage 14. In other examples, the wing body 18 is for example a main body of a foldable wing tip, connected to a portion of the wing 12 which is itself fixed relatively to the fuselage 14.

The moveable surface 20 is moveable relatively to the wing body 18. The moveable surface 20 is for example moveable between a deployed and a stowed position relative to the wing body 18, for example along a deployment direction D.

The track assembly 22 connects the wing body 18 and the moveable surface 20. For example, the track assembly 22 guides displacement of the moveable surface 20 relatively to the wing body 18, for example along the deployment direction D. In an example, the track assembly 22 is fastened to the moveable surface 20 and is guided on the wing body 18 via guiding means (non-represented) of the wing body 18.

In the example illustrated in figure 1, the high lift system 16 is a leading-edge high lift system. In such an example, the moveable surface 20 is then forming a slat.

The track assembly 22 comprises a track 24. For example, the track assembly 22 further comprises at least one filling device 26.

The track 24 defines for example the deployment direction D of the high lift system.

The track 24 is for example elongated along an elongation direction E. The elongation direction E corresponds for example to the deployment direction D.

As visible from figure 2, the elongation direction E is for example curved, such that the track 24 is for example elongated along such a curved elongation direction E, corresponding in this example to the deployment direction D.

As visible from figure 2, the track 24 comprises for example a proximal end 28 and a distal end 30. The track 24 is then for example elongated between its proximal 28 and distal 30 ends.

The proximal end 28 is for example connected to the wing body 18 and the distal end 30 is for example connected to the moveable surface 20. As above mentioned, the proximal end 28 is for example guided relative to the wing body 18 and the distal end 30 is for example fastened to the moveable surface 20.

The track 24 comprises at least one cavity 33. As this will be presented in more details later, the at least one cavity 33 is configured for receiving a cavity filling device 26.

Each cavity 33 is in particular defined in the track 24 and for example defined by a border B of such cavity 33. For example, each cavity 33 corresponds to a recessed area of the track 24, which is recessed relatively to a border of such cavity 33.

As understood from figure 2, the border B does not necessarily extend along a plane but might extend along a curve surface.

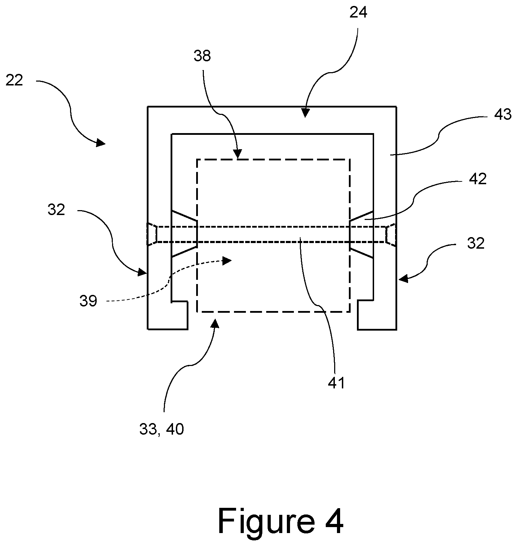

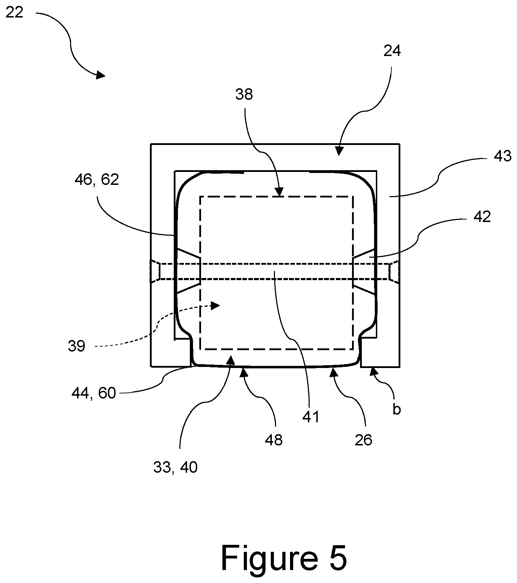

As presented in the examples of figures 4 and 5, and as this will be presented in more details later, the track 24 comprises for example two substantially flat opposed lateral faces 32.

One understands that such lateral faces 32 are arranged laterally for the track 24, that is, for example, that one of such faces 32 corresponds to a port face of the track 24 and that the other of such faces 32 corresponds to a starboard face of the track 24. For example, the two substantially flat opposed lateral faces 32 are arranged parallel to the elongation direction E. For example, when the elongation direction E is a curved direction, the substantially flat opposed lateral faces 32 are parallel to a plane (non-represented) along which the curved elongated direction E extends.

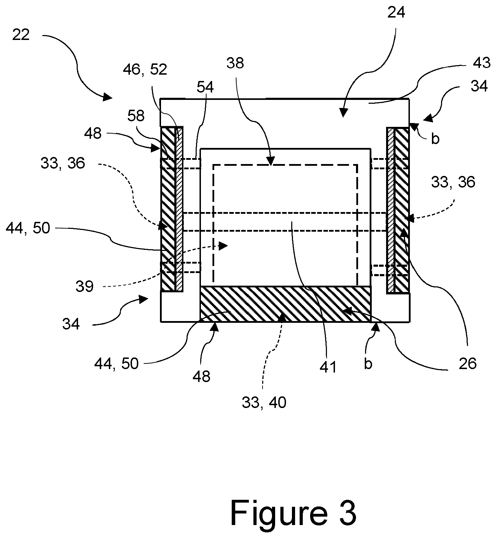

In the example presented on figures 2 and 3, the track 24 comprises at least one concave lateral side 34. For example, and as visible from figure 2, the track 24 comprises two concave opposed lateral sides 34.

In particular, in the example of figures 2 and 3, the track has a Pi profile and each of the legs of such a Pi profile defines the two concave opposed lateral sides 34.

As visible from figures 2 and 3, the or each concave lateral side(s) 34 defines at least one respective lateral cavity 36. The border B of such lateral cavities 36 is for example defined by protruding portions of a profile defining the track 24 and/or ribs of the track (non represented).

Such lateral cavities 36 are cavities 33 of the track as above mentioned. Such lateral cavities 36 are thus each configured for receiving a cavity filling device 26.

In an example, and such as visible in figures 3 to 5, the track 24 defines an internal volume 39. As this will be presented later on, a main body 43 of the track defines such an internal volume 39.

The internal volume 39 extends along the elongation direction E in the track 24 and opens for example on a lower face (non-referenced) of the track 24. One understands that the lower face is for example arranged on a same side as an intrados of the wing body 18.

Furthermore, as visible on figure 2, the track 24 comprises for example a rack arrangement 38.

As made visible in figures 3 to 5, the track 24 comprises a main body 43 and such a rack arrangement 38, the rack arrangement 38 being for example fastened to the main body 43. In another example, the rack arrangement 38 is integral with the rest of the track 24.

For example, the rack arrangement 38 is arranged in the internal volume 39.

The rack arrangement 38 is for example fastened in the internal volume 39 by a plurality of fastening means 41 of the track assembly 22.

Furthermore, and for example, the track 24 further comprises for example bossing 42 which abut with the rack arrangement 38. The bossing 42 are for example receiving the fastening means 41 and are for example integral with the main body 43. As visible from figures 4 and 5, the bossing 42 abut for example lateral sides (non-referenced) of the rack arrangement 38.

In the example presented in figures 4 and 5, the bossing 42 protrude in the internal volume 39.

As visible from figure 2, the track 24 defines a distal cavity 40, arranged between the rack arrangement 38 and the distal end 30 of the track. The distal cavity 40 extends for example in the continuity of the rack arrangement 38.

The distal cavity 40 corresponds for example to a portion of the internal volume 39 which is not filled by the rack arrangement 38.

In such an example, the distal cavity 40 opens for example on the lower face (non-referenced) of the track 24.

As visible from figure 2, the border B of such distal cavity 40 is for example defined by protruding portions of a profile defining the track 24 and/or ribs of the track and/or by the rack arrangement 38 (non-represented).

The distal cavity 40 is a cavity 33 of the track 24 as above mentioned. Such a distal cavity 40 is thus configured for receiving a cavity filling device 26.

As presented above, each cavity 33 of the track, that is the lateral 36 and distal 40 cavities, is configured for receiving a respective cavity filling device 26.

Each cavity filling device 26 is configured for being installed in the, or one of the cavities 33 of the track 24. In particular, each cavity filling device 26 is configured for obstructing such cavity 33 of the track.

One understands by the term obstructing the cavity 33, that the cavity filling device 26 is configured for preventing intrusion, for example of an airflow, in the cavity 33. In other words, the cavity filling device 26 does not necessary fill an entire volume of the cavity 33 but may just extend in the cavity 33 to present intrusion, for example of an airflow, in the cavity 33.

As understood from the above, and since the cavity 33 is a lateral cavity 36 or a distal cavity 40, the cavity filling device 26 is for example configured for being installed in such a lateral cavity 36 and/or such a distal cavity 40.

As visible in the examples of figures 3 and 5, the cavity filling device 26 comprises an obstructing portion 44 and comprises for example a fastening portion 46.

As visible from figures 3 and 5, the obstructing portion 44 defines an obstruction face 48.

The obstruction face 48 is for example configured to be flush with the border B of the cavity 33 when the cavity filling device 26 is installed in said cavity 33. **In** particular, as visible from figures 3 and 5, the obstruction face 48 of the obstructing portion 46 of the cavity filing devices 26, which are installed in the lateral 36 and distal 40 cavities, is flush with the borders B of such cavities 36, 40.

As understood from the above, the obstruction face 48 is for example a face configured for preventing intrusion, for example of an airflow, in the cavity 33.

The fastening portion 46 is configured to be installed in the cavity 33. The fastening portion 46 is configured for maintaining the obstruction face 48 flush with the border B of the cavity 33 when the cavity filling device 26 is installed in said cavity 33.

The fastening portion 46 is for example connected to the obstruction portion 44.

The fastening portion 46 is for example extending on a side of obstruction portion 44 which is opposed to the obstruction face 48.

A cavity filling device 26 such as the cavity filling device 26 arranged in a distal cavity 40 presented in figures 2 and 3 will now be described in more details.

The cavity filling device 26 comprises a foam element 50. In particular, the obstructing portion 44 comprises such a foam element 50.

The foam element 50 is arranged in the distal cavity 40 for example to fill the distal cavity 40.

The geometry of the foam element 50 corresponds for example to the geometry of the cavity 33 in which such a foam element 50 is installed. In the case illustrated in figures 2 and 3, the geometry of such a foam element 50 corresponds to the geometry of the distal cavity 40, but one understands that a cavity filling device 26 comprising a foam element 50 as above mentioned could be adapted to any cavity 33.

A face of such a foam element 50 then corresponds to the obstruction face 48. In other words, the foam element 50 defines the obstruction face 48.

The foam element 50 is for example made of material chosen in the list of : polystyrene, phenolic, polyethylene, polypropylene, derivatives of polymethylmethacrylate.

Such cavity filling device 26 is for example bonded, for example glued, to the track 24, for example such that the obstruction face 48 is flush with the border B of the cavity 33, in which the cavity filling device 26 is installed.

A cavity filling device 26 such as the cavity filling device 26 arranged in lateral cavities 36 and presented in figures 2 and 3 will now be described in more details.

As the above presented cavity filling device 26 arranged in the distal cavity 40 illustrated figures 2 and 3, such a cavity filling device comprises a foam element 50.

This cavity filling device 26 differs however from such another already presented cavity filling device 26 in that it also comprises a fastening portion 46 (as above presented).

As visible from figure 3, the fastening portion 46 comprises a fastening plate 52.

The foam element 50 is fastened to the fastening plate 52 and is for example bonded to the fastening plate 52. In an example, the foam element 50 is glued to the fastening plate 52.

The fastening plate 52 is for example configured to be bolted at a bottom (non-referenced) of the cavity 33, here lateral cavity 36, in which the cavity filling device 26 is installed.

To that end, the fastening plate 52 comprises for example at least one hole 54, configured for receiving one bolt (non-represented) of the track assembly 22.

The foam element 50 of such a cavity filling device 26 further comprises for example at least one opening 58, each opening 58 being for example aligned with a respective hole 54 of the fastening plate 52.

One understands that the material of the foam element 50 is as above presented and that such a foam element 50 also defines the obstruction face 48 of its cavity filling device 26.

One further understands that such a cavity filling device 26 could be adapted to any cavity 33 of the track 24.

A cavity filling device 26 such as the cavity filling device 26 presented in figure 5 will now be described in more details.

Such a cavity filling device 26 comprises an obstructing portion 44 and a fastening portion 46 as per the above generic description.

The obstructing portion 44 and the fastening portion 46 of such a cavity filling device 26 are for example integral.

The obstructing portion 44 and the fastening portion 46 are for example formed from a metal sheet, for example bent/stamped to adopt a profile as visible from figure 5. In other examples, the obstructing portion 44 and the fastening portion 46 are made from a reinforced plastic such as for example a glass fiber-reinforced plastic.

The obstructing portion 44 comprises a shell element 60.

The shell element 60 defines the obstruction face 48, in particular such that the obstruction face 48 is flush with the border B of the cavity 33.

In the example of figure 5 where the cavity filling device 26 is installed in the distal cavity 40, the shell element extends 60 along a curved surface extending in the prolongation of the border B.

In a non-illustrated embodiment, the shell element 60 comprises a drainage hole, for example configured to drain a fluid entrapped in the cavity 33 between the shell element 60 and the track 24.

The fastening portion 46 comprises a plurality of lugs 62.

Each lug 62 extends for example in the cavity 33, here the distal cavity 40.

Each lug 62 is for example configured for cooperating with a side (non-referenced) of the cavity 33.

Each lug 62 is for example connected with a lateral band (non-referenced), which is itself connected along one edge (non-referenced) of the shell element 60.

For example, and as presented in the example of figure 5, the lugs 62 are spring lugs.

In such an example, a section of the cavity 33 is for example reduced at its opening (non-referenced) such that the cavity filling device 26 can be snapped in the cavity 33. In alternative, or in complement, the track assembly 22 comprises fastening means such as for example bolts (non-represented), configured for fastening the cavity filling device 26 to the track 24.

As understood from the above, the plurality of lugs 62 and the shell 60, and for example the lateral band, are integral.

For example, the shell 60 comprises a plurality of couple of lugs 62, each couple of lug 62 comprising two lugs 62 arranged on opposed edges of the shell element 60 and protruding on a same direction relative to the shell element. In particular, and for example, each lug 62 protrudes away from the obstruction face 48, such that each lug extends in the cavity 33 when the cavity filling device 26 is arranged in the cavity 33.

As presented above, a cavity filling device 26 as above described is particularly advantageous to have an effective yet simple way to reduce aerodynamic noise of high lift system tracks.

The use of a cavity filling device 26 comprising a fastening portion 46 is especially advantageous for simplifying the installation and/or deinstallation of the cavity filling device 26 to the track 24.

A cavity filling device 26 comprising a shell element 60 and/or a plurality of lugs is especially advantageous for obtaining a robust and easy to integrate cavity filling device 26.

The use of a cavity filling device 26 comprising a foam element 50 as above mentioned is especially effective to reduce aerodynamic noise.

The use of a fastening plate 52, for example in conjunction with a foam element 50, for example bonded with a foam element 50, is especially advantageous for further simplifying the integration of the cavity filling devices 26 in the track assembly 22.

The use of a track 24 as presented above, and for example of a track 24 having two substantially flat opposed lateral faces 32 is for example especially advantageous for further reducing the aerodynamic noise resulting from turbulent airflow.

The track assemblies 22 above presented are thus especially advantageous solution for effectively coupling a wing body 18 to a moveable surface 20 while reducing the aerodynamic noise associated with such a coupling.

### REFERENCE SIGNS:

- 10: aircraft
- 12: wing
- 14: fuselage
- 16: high lift system
- 18: wing body
- 20: moveable surface
- 22: track assembly
- 24: track
- 26: filling device
- 28: proximal end
- 30: distal end
- 32: flat opposed lateral faces
- 33: cavity
- 34: concave lateral side
- 36: lateral cavity
- 38: rack arrangement
- 39: internal volume
- 40: distal cavity
- 41: fastening means
- 42: bossing
- 43: main body
- 44: obstructing portion
- 46: fastening portion
- 48: obstruction face
- 50: foam element
- 52: fastening plate
- 54: hole
- 58: opening
- 60: shell element
- 62: lug
- e: elongation direction
- d: deployment direction
- b: border

## Claims

1. Cavity filling device (26) for a track (24) of a high lift system (16), the cavity filling device (26) being configured for being installed in a cavity (33, 36, 40) of the track (24) for obstructing said cavity (33, 36, 40), the cavity filling device (26) comprising an obstructing portion (44) defining an obstruction face (48), the obstruction face (48) being configured to be flush with a border (B) of the cavity (33, 36, 40) when the cavity filling device (26) is installed in said cavity (33, 36, 40).

2. Cavity filing device (26) according to claim 1, wherein the cavity filling device (26) further comprises a fastening portion (46) configured to be installed in the cavity (33, 36, 40) for maintaining the obstruction face (48) flush with the border (B) of the cavity (33, 36, 40) when the cavity filling device (26) is installed in said cavity (33, 36, 40).

3. Cavity filling device (26) according to claim 2, wherein the fastening portion (46) comprises a plurality of lugs (62), each lug (62) being configured for cooperating with a side of the cavity (33, 36, 40).

4. Cavity filling device (26) according to claim 2 or 3, wherein the fastening portion (46) comprises a fastening plate (52), the fastening plate (52) being configured to be bolted at a bottom of the cavity (33, 36, 40).

5. Cavity filling device (26) according to any of the preceding claims, wherein the obstructing portion (44) comprises a shell element (60), the shell element (60) defining the obstruction face (48).

6. Cavity filling device (26) according to any of the preceding claims, wherein the obstructing portion (44) comprises a foam element (50), the foam element (50) defining the obstruction face (48).

7. Cavity filling device (26) according to claim 5, taken in its dependency to claim 3, wherein the plurality of lugs (62) and the shell (60) element are integral.

8. Cavity filing device (26) according to claim 6, taken in its dependency to claim 4, wherein the foam element (50) is bonded to the fastening plate (52).

9. Track (24) for a high lift system (16), the track (24) defining a deployment direction (D) for the high lift system (16), the track (24) comprising at least one cavity (33, 36, 40), the at least one cavity (33, 36, 40) being configured for receiving a cavity filling device (26) according to any of the claims 1 to 8.

10. Track (24) according to claim 9, wherein the track (24) comprises two substantially flat opposed lateral faces (32).

11. Track assembly (22) for a high lift system (16), the track assembly (22) comprising a track (24) according to claim 9 or 10 and at least one cavity filling device (26) according to any of the claims 1 to 8, the at least one cavity filling device (26) being installed in the cavity (33, 36, 40), or one of the cavities (33, 36, 40), of the track (24), for filling said cavity (33, 36, 40).

12. Track assembly (22) according to claim 11, wherein the track (24) is according to claim 9, wherein the track (24) comprises concave opposed lateral sides (34), each concave lateral side (34) defining a respective lateral cavity (36), a respective cavity (26) filing device being installed in each of the defined lateral cavities (36), for filing said cavities (36).

13. Track assembly (22) according to claim 11 or 12, wherein the track (24) comprises a rack arrangement (38), the track (24) defining a distal cavity (40), arranged between the rack arrangement (38) and a distal end (30) of the track (24), and extending in the continuity of the rack arrangement (38), a respective cavity filing device (26) being installed in the defined distal cavity (40).

14. High lift system (16) comprising a wing body (18), a moveable surface (20) and a track assembly (22) according to any of the claims 11 to 13, the track assembly (22) connecting the wing body (18) and the moveable surface (20).

15. Aircraft (10) comprising a high lift system (16) according to claim 14.
